# EUROPÄISCHE PATENTANMELDUNG

(11) **EP 3 323 556 A1**
(43) Veröffentlichungstag der Anmeldung: **23.05.2018**
(21) Anmeldenummer: 16199246.6
(22) Anmeldetag: 17.11.2016
(51) Int. Cl.: B25B 31/00, F16B 13/00, F16B 13/12

(54) **SETZGERÄT MIT AXIAL SPERRBAREN ANTRIEBSWELLEN, SETZVERFAHREN UND SPREIZANKER HIERFÜR**

(71) Anmelder: HILTI Aktiengesellschaft, 9494 Schaan (LI)
(72) Erfinder: Noser, Martin, 9487 Gamprin (LI); Nguyen, Huu Toan, 9453 Eichberg (CH)
(74) Vertreter: Hilti Aktiengesellschaft Corporate Intellectual Property

(57) **Zusammenfassung**

Die Erfindung betrifft ein Setzgerät für einen Spreizanker (10), welcher eine Spreizhülse und einen in der Spreizhülse angeordneten Spreizkörper für die Spreizhülse aufweist, mit einer inneren Antriebswelle (20) zum axialen Vortreiben des Spreizkörpers in der Spreizhülse, mit einer die innere Antriebswelle (20) umgebenden äusseren Antriebswelle zum drehenden Antreiben und axialen Vortreiben der Spreizhülse in ein Substrat (6), wobei die innere Antriebswelle (20) in einem hinteren Bereich ein Einsteckende (29) zum Einsetzen in eine Schlagbohrmaschine aufweist, und wobei die äussere Antriebswelle drehfest und zugleich zumindest in Grenzen axial verschiebbar an der inneren Antriebswelle (20) gelagert ist, und mit einer freigebbaren Sperreinrichtung, mit der zum Übertragen von nach vorne gerichteten Axialkräften von der inneren Antriebswelle (20) auf die äussere Antriebswelle eine axiale Verschiebung der inneren Antriebswelle (20) relativ zur äusseren Antriebswelle nach vorne zeitweise begrenzbar ist. Die Erfindung betrifft ferner ein Setzverfahren, das mit dem Setzgerät durchgeführt werden kann, und einen Spreizanker (10), der mit dem Setzgerät gesetzt werden kann.

## Beschreibung

Die Erfindung betrifft ein Setzgerät für einen Spreizanker, welcher eine Spreizhülse und einen in der Spreizhülse angeordneten Spreizkörper für die Spreizhülse aufweist, ein Setzverfahren für einen Spreizanker, einen Spreizanker und eine Kombination aus einem Setzgerät und einem Spreizanker.

Beispielsweise aus der DE2617212 A1 sind Spreizanker bekannt, die aus einer Spreizhülse mit einem sich nach vorne verjüngenden Spreizkanal und einem Spreizkörper bestehen, der im Spreizkanal angeordnet ist. Zum Verankern wird der Spreizkörper im Spreizkanal nach vorne gegen die Verjüngung getrieben, wo der Spreizkörper die Spreizhülse spreizt. Ein Werkzeug mit einem Zapfen zum axialen Vortrieben des Spreizkörpers im Spreizkanal ist beispielsweise aus der DE102012221114 B3 bekannt, wobei gemäss DE 102012221114 B3 auf den Zapfen ein Bohrer aufsteckbar ist.

In der DE7634992 U1 wird ein weiterer Spreizanker mit einem sich nach vorne verjüngenden Spreizkanal, in dem ein Spreizkörper vorgetrieben wird, beschrieben, wobei der Spreizanker gemäss DE7634992 U1 selbstbohrend ausgeführt ist. Insbesondere weist der Spreizanker der DE7634992 U1 an der vorderen Stirnseite der Spreizhülse eine Bohrkrone und an der rückwärtigen Stirnseite der Spreizhülse nutenförmige Vertiefungen zum Übertragen einer Drehbewegung auf die Spreizhülse auf.

Weitere Spreizanker sind aus der US2707897 A bekannt. Diese Schrift lehrt, die Spreizanker in vorab mit einem Bohrer gebohrte, zylindrische Bohrlöcher einzusetzen, und die Spreizhülse während des Vortreibens des Spreizkörpers gegen die Verjüngung des Spreizkanals mittels eines Setzgeräts, welches in die Spreizhülse eingreift, in Rotation zu versetzen, wodurch im Substrat ein konischer Hinterschnitt gebildet wird. Zum Schneiden dieses Hinterschnitts weisen die Spreizhülsen der US2707897 A auf Höhe der Verjüngung Schneidelemente auf. Gemäss JP60099311 U1 wird der Spreizkörper eines Spreizankers durch Drehung eines Zusatzelements des Spreizkörpers in einem Innengewinde der Spreizhülse axial nach vorne gegen die Verjüngung des Spreizkanals getrieben.

Die DE102008044124 A1 und die DE102007000235 A1 zeigen Setzgeräte für einschraubbare Dämmstoffdübel. Die Setzgeräte weisen jeweils zwei koaxiale Wellen auf, die nach Erreichen einer bestimmten Tiefe drehentkoppelt werden.

Verschiedenartige Ankervorrichtungen, die jeweils Bohrspitzen zum selbstbohrenden Setzen aufweisen, sind aus der US6250866 B1, der US20080008553 A1/ US8662806 B2 / US8266779 B2, der EP0845605 B1, der US7070376 B1, der US4386882 A, der US8070405 B2 und der EP2366869 A2 bekannt. Die DE102011003290 A1 zeigt eine Schraube, die im Loch radial aufgeweitet wird.

Die europäische Patentanmeldung mit dem Anmeldeaktenzeichen 16159173.0 beschreibt flache Einlegelemente, welche in Beton eingebohrt werden, und welche zu diesem Zweck harte Schneiden aufweisen können.

Der ICC-ES Evaluation Report ESR-3912, ausgegeben 10/2016, beschreibt einen Hinterschnittanker mit einer Spreizhülse, welche mittels eines starren Setzgerätes drehschlagend auf einen vor der Spreizhülse angeordneten Konus geschoben wird, wodurch ein Hinterschnitt im Substrat gebildet wird.

Aufgabe der Erfindung ist es, ein Setzgerät für einen Spreizanker, ein Verfahren zum Setzen eines Spreizankers und einen Spreizanker anzugeben, mit denen bei geringem Aufwand, guter Handhabbarkeit und hoher Zuverlässigkeit in einfacher Weise gute Lastwerte erhalten werden können.

Die Aufgabe wird erfindungsgemäss durch ein Setzgerät mit den Merkmalen des Anspruchs 1, ein Setzverfahren mit den Merkmalen des Anspruchs 10 und einen Spreizanker mit den Merkmalen des Anspruchs 12 gelöst. Bevorzugte Ausführungsformen sind in den abhängigen Ansprüchen angegeben.

Ein erfindungsgemässes Setzgerät für einen Spreizanker, welcher eine Spreizhülse und einen in der Spreizhülse angeordneten Spreizkörper für die Spreizhülse aufweist, ist ausgebildet:
- mit einer inneren Antriebswelle zum axialen Vortreiben des Spreizkörpers in der Spreizhülse,
- mit einer die innere Antriebswelle umgebenden äusseren Antriebswelle zum drehenden Antreiben und axialen Vortreiben der Spreizhülse in ein Substrat,
- wobei die innere Antriebswelle in einem hinteren Bereich ein Einsteckende zum Einsetzen in eine Schlagbohrmaschine aufweist, und
- wobei die äussere Antriebswelle drehfest und zugleich zumindest in Grenzen axial verschiebbar an der inneren Antriebswelle gelagert ist,
- und mit einer freigebbaren Sperreinrichtung, mit der zum Übertragen von nach vorne gerichteten Axialkräften von der inneren Antriebswelle auf die äussere Antriebswelle eine axiale Verschiebung der inneren Antriebswelle relativ zur äusseren Antriebswelle nach vorne zeitweise begrenzbar ist.

Ein erster Grundgedanke der Erfindung kann in einem Setzgerät gesehen werden, welches ein selbstbohrendes und zudem selbsthinterschneidendes Setzen eines Spreizankers mit innenliegendem Spreizkörper erlaubt. Das Setzgerät weist eine innere Antriebswelle auf, welche an ihrer Rückseite mit einer Schlagbohrmaschine gekoppelt wird, und welche an ihrer Vorderseite gegen den Spreizkörper des Spreizankers wirkt, um den Spreizkörper relativ zur Spreizhülse des Spreizankers vorzutreiben. Ferner weist das Setzgerät eine äussere Antriebswelle auf, welche die innere Antriebswelle umgibt, und welche an ihrer Vorderseite gegen die Spreizhülse wirkt, um die Spreizhülse drehend oder drehschlagend in das Substrat einzutreiben. Die äussere Antriebswelle ist mit der inneren Antriebswelle permanent drehgekoppelt, so dass in jeder Phase des Setzverfahrens eine von der Schlagbohrmaschine auf die innere Antriebswelle aufgebrachte Drehbewegung von der inneren Antriebswelle auf die äussere Antriebswelle und von dieser wiederum auf die Spreizhülse übertragen werden kann. Insbesondere kann die Spreizhülse somit sowohl in einer ersten Phase des Setzverfahrens, in welcher der Spreizanker selbstbohrend in das Substrat eingebohrt wird, als auch in einer zweiten Phase des Setzverfahrens, in welcher der Spreizanker selbsthinterschneidend aufgeweitet wird, mittels desselben Elements, nämlich mittels der äusseren Antriebswelle, gedreht werden. Die äussere Antriebswelle ist, zumindest in Grenzen, das heisst zumindest über eine gewisse axiale Strecke, axial relativ zur inneren Antriebswelle verschiebbar an der inneren Antriebswelle angeordnet, und zwar unter Aufrechterhaltung der drehfesten Verbindung zwischen der inneren Antriebswelle und der äusseren Antriebswelle. Aufgrund dieser axialen Verschiebbarkeit kann in der zweiten Phase des Setzverfahrens durch axiale Belastung der inneren Antriebswelle mittels der Schlagbohrmaschine ausschliesslich der an der inneren Antriebswelle anliegende Spreizkörper axial belastet werden, wohingegen die Spreizhülse axial unbelastet bleibt, mit der Folge, dass der Spreizkörper relativ zur Spreizhülse nach vorne in den Bereich der Verjüngung des Spreizkanals getrieben und die Spreizhülse somit radial aufgeweitet werden kann. Da trotz der axialen Entkopplung der beiden Antriebswellen die Drehkopplung der beiden Antriebswellen in der zweiten Phase des Setzverfahrens fortbesteht, kann die Spreizhülse beim radialen Aufweiten der Spreizhülse gleichzeitig von der Schlagbohrmaschine um ihre Längsachse gedreht werden, mit der Folge, dass am Umfang der Spreizhülse Substrat drehend abgeschabt und somit in besonders wirksamer Weise ein Hinterschnitt im Substrat erzeugt werden kann.

Zusätzlich ist nach der Erfindung eine freigebbare Sperreinrichtung vorgesehen, mit welcher, in einem gesperrten Zustand der Sperreinrichtung, die axiale Verschiebbarkeit der äusseren Antriebswelle an der inneren Antriebswelle zumindest nach hinten zeitweise blockierbar ist, das heisst mit welcher die beiden Antriebswellen zeitweise derart axial fest koppelbar sind, dass von der inneren Antriebswelle zumindest nach vorne gerichtete Axialkräfte auf die äussere Antriebswelle übertragbar sind. Diese Sperreinrichtung wird während der ersten Phase des Setzverfahrens gesperrt, was zwei Effekte hat: Zum einen können von der Schlagbohrmaschine auf die innere Antriebswelle aufgebrachte Axialschläge von der inneren Antriebswelle auf die äussere Antriebswelle und von dieser wiederum auf die Spreizhülse übertragen werden, so dass die Spreizhülse in der ersten Phase des Setzverfahrens drehschlagend angetrieben werden kann, was wiederum ein besonders wirksames Einbohren des Spreizankers auch in harte Substrate ermöglicht. Zum anderen kann durch die anfangs gesperrte Sperreinrichtung verhindert werden, dass die innere Antriebswelle schon in der ersten Phase des Setzverfahrens auf den Spreizkörper wirkt, das heisst es kann sichergestellt werden, dass mit der Aufweitung der Spreizhülse und der Erstellung des Hinterschnitts erst dann begonnen wird, wenn der Spreizanker schon ein Stück weit in das Substrat eingetrieben ist, mit der Folge, dass ein besonders gut lokalisierter Hinterschnitt erhalten wird. In der an die erste Phase anschliessenden zweiten Phase des Setzverfahrens wird die Sperreinrichtung freigegeben und die beiden Antriebswellen werden somit für eine axiale Relativverschiebung freigegeben, mit der Folge, dass wie bereits oben beschrieben die innere Antriebswelle in der äusseren Antriebswelle vorgeschoben werden kann und der Spreizkörper dabei in der Spreizhülse vorgetrieben werden kann, ohne die Spreizhülse tiefer in das Substrat einzubohren.

Durch die Erfindung wird somit ein Setzgerät zur Verfügung gestellt, mit dem ein Spreizanker in das Substrat eingebohrt, im Substrat ein Hinterschnitt erzeugt und der Spreizanker im Hinterschnitt verankert werden kann, und zwar in einem kontinuierlichen Setzverfahren, bei dem es nicht erforderlich ist, das Setzgerät umzusetzen, und das somit besonders einfach, mit einer besonders geringen Zahl von Arbeitsschritten und/oder Werkzeugen und besonders zuverlässig durchführbar ist. Aufgrund der Anordnung des Spreizankers in einem Hinterschnitt können dabei besonders gute Lastwerte erzielt werden, die zudem relativ unempfindlich gegen mögliche Bohrmehlreste im Bohrloch sind. Darüber hinaus kann eine automatische Anpassung an unterschiedliche Rissbreiten im Substrat ermöglicht sein.

Soweit hier von der radialen Richtung, der axialen Richtung und/oder der Umfangsrichtung die Rede ist, und auch soweit hier von einer Drehung die Rede ist, soll sich dies insbesondere auf die Längsachse der beiden Antriebswellen beziehen, also vorzugsweise auf diejenige Achse, bezüglich derer die beiden Antriebswellen koaxial angeordnet sind. Die Richtungsangaben "vorne" und "hinten" beziehungsweise "rückwärtig" sollen hier einheitlich, bezogen auf dieselbe Achse, verstanden werden, wobei diese Achse insbesondere die Längsachse der beiden Antriebswellen sein kann. Unter der drehfesten Lagerung der äusseren Antriebswelle an der inneren Antriebswelle kann in fachüblicher Weise insbesondere verstanden werden, dass die innere Antriebswelle die äussere Antriebswelle drehend mitnimmt. Die drehfeste Lagerung ist insbesondere um die Längsachse der beiden Antriebswellen gegeben. Da der Drehsinn einer Schlagbohrmaschine während des Bohrvorgangs regelmässig nicht umkehrt, könnte eine in nur einer Drehrichtung drehfeste Anordnung ausreichend sein. Vorzugsweise ist jedoch die äussere Antriebswelle in beiden entgegengesetzten Drehrichtungen drehfest an der inneren Antriebswelle gelagert, was im Hinblick auf die Anwendungssicherheit und den Herstellungsaufwand vorteilhaft sein kann. Die äussere Antriebswelle dient unter anderem zum drehenden Antreiben der Spreizhülse um die Längsachse der beiden Antriebswellen. Das Einsteckende dient zum Koppeln des Abtriebs der Schlagbohrmaschine mit der inneren Antriebswelle, insbesondere für eine Übertagung einer Drehbewegung und von Axialschlägen vom Abtrieb auf die innere Antriebswelle. Am Einsteckende kann die innere Antriebswelle vorzugsweise ein Mitnehmerprofil aufweisen. Die äussere Antriebswelle ist vorzugsweise in Axialrichtung kürzer als die innere Antriebswelle. Die äussere Antriebswelle ist insbesondere als Hohlwelle ausgebildet, damit die innere Antriebswelle durch die äussere Antriebswelle hindurchtreten kann. Die innere Antriebswelle und/oder die äussere Antriebswelle besteht vorzugsweise aus einem Metallmaterial, das auch beschichtet sein kann. Die innere Antriebswelle kann einstückig oder mehrstückig ausgebildet sein. Ebenso kann die äussere Antriebswelle einstückig oder mehrstückig ausgebildet sein. Das Substrat besteht vorzugsweise aus einem mineralischen Baustoff, insbesondere aus Beton.

Der Spreizanker, welcher mit dem Setzgerät im Setzverfahren gesetzt wird, weist insbesondere eine Spreizhülse mit einem sich nach vorne verjüngenden Spreizkanal auf, das heisst mit einem Spreizkanal, dessen Querschnitt nach vorne hin abnimmt. Der Spreizanker weist ferner einen Spreizkörper auf, der im Spreizkanal angeordnet ist. Zum Verankern wird der Spreizkörper im Spreizkanal nach vorne gegen die Verjüngung getrieben, wo der Spreizkörper die Spreizhülse aufweitet. In einem rückwärtigen Bereich weist die Spreizhülse eine, insbesondere innenseitig an der Spreizhülse angeordnete, Lastangriffseinrichtung zum Einleiten von Zugkräften in die Spreizhülse auf, wobei die Lastangriffseinrichtung vorzugsweise ein Innengewinde ist. Zweckmässigerweise ist die Spreizhülse in einem vorderen Bereich geschlitzt, insbesondere mit zumindest einem axial verlaufenden Schlitz versehen, was den Aufweitvorgang unterstützen kann. Ebenfalls im Hinblick auf die Unterstützung des Aufweitvorgangs kann der Spreizkanal vorzugsweise eine Durchgangsöffnung in der Spreizhülse bilden.

Besonders bevorzugt ist es, dass die innere Antriebswelle zumindest bereichsweise eine Hohlwelle ist, also ein Element mit einem innenliegenden, insbesondere axial verlaufenden Kanal. Hierdurch kann in besonders einfacher Weise beim Setzverfahren anfallendes Bohrmehl abgeführt werden. Insbesondere ist die Hohlwelle also eine Hohlwelle zum Abführen von beim Setzen des Spreizankers anfallendem Bohrmehl. Vorzugsweise ist die Hohlwelle nach vorne offen, um einen stirnseitigen Eintritt von Bohrmehl zu erlauben. Zusätzlich oder alternativ können auch radial verlaufende Kanäle in die Hohlwelle vorgesehen sein. Zweckmässigerweise weist das Setzgerät eine Drehdurchführung zum Abführen von Material aus der als Hohlwelle ausgeführten, drehenden inneren Antriebswelle auf, also vorzugsweise eine Durchführung für einen abgedichteten Materialübergang aus der sich drehenden inneren Antriebswelle in einen feststehenden Körper. Für einen besonders einfachen konstruktiven Aufbau ist die Drehdurchführung vorzugsweise axial zwischen dem Einsteckende und der äusseren Antriebswelle an der inneren Antriebswelle angeordnet. Durch die Hohlwelle kann Bohrmehl besonders effektiv abgeführt werden, so dass ein besonders sauberes Bohrloch mit einer für den Befestigungspunkt besonders vorteilhaften Geometrie entstehen kann.

Weiterhin ist es besonders vorteilhaft, dass die freigebbare Sperreinrichtung zumindest ein radial versetzbares Anschlagelement aufweist, welches zum Begrenzen der axialen Verschiebung der inneren Antriebswelle relativ zur äusseren Antriebswelle nach vorne in eine Sperrposition bringbar ist, in welcher sich das Anschlagelement zwischen der äusseren Antriebswelle und der inneren Antriebswelle befindet. Insbesondere kann sich das Anschlagelement in der Sperrposition axial zwischen der äusseren Antriebswelle und der inneren Antriebswelle in einer sowohl die äussere Antriebswelle als auch die innere Antriebswelle überlappenden Lage befinden. In der Sperrposition kann an der Vorderseite des Anschlagelements die äussere Antriebswelle und an der Rückseite des Anschlagelements die innere Antriebswelle am Anschlagelement anschlagen, so dass die axiale Verschiebung der inneren Antriebswelle in der äusseren Antriebswelle nach vorne durch das Anschlagelement begrenzt ist. Somit ist eine besonders einfache und zuverlässige Begrenzung der axialen Verschiebung möglich. Insbesondere kann vorgesehen sein, dass die innere Antriebswelle eine nach vorne weisende Schulter, vorzugsweise Ringschulter, aufweist, und dass das Anschlagelement in der Sperrposition an die hintere Stirnfläche der äusseren Antriebswelle und an die nach vorne weisenden Schulter der inneren Antriebswelle anschlägt, was den konstruktiven Aufwand und den Fertigungsaufwand noch weiter reduzieren und die Zuverlässigkeit noch weiter erhöhen kann. Das Anschlagelement ist zwischen der eben beschriebenen Sperrposition und einer Freigabeposition versetzbar, vorzugsweise radial versetzbar, wobei in der Freigabeposition die durch die Sperreinrichtung in der Sperrposition bewirkte Begrenzung der axialen Verschiebung aufgehoben ist.

Zweckmässigerweise weist das Setzgerät ein Gehäuse mit einer Durchgangsöffnung auf, in welcher die äussere Antriebswelle und die innere Antriebswelle drehbar gelagert sind. Dieses Gehäuse kann einen Handgriff und/oder eine Aufnahme für den Spreizanker bilden, was die Handhabbarkeit weiter verbessern kann.

Besonders bevorzugt ist es, dass das Gehäuse eine Aufnahme zum Aufnehmen des radial versetzbaren Anschlagelements in der Freigabeposition aufweist. Insbesondere kann vorgesehen sein, dass das Gehäuse das Anschlagelement so lange in dessen Sperrposition hält, bis das Anschlagelement, insbesondere bei zunehmendem Bohrfortschritt, axial in den Bereich der Aufnahme gelangt und dann mittels eines Federmechanismus in die Aufnahme gedrängt wird. Hierdurch kann in besonders einfacher und zuverlässiger Weise ein automatisches Freigeben der Sperreinrichtung beim Übergang von der ersten Phase zur zweiten Phase des Setzverfahrens realisiert werden.

Zweckmässigerweise ist das Anschlagelement eine, insbesondere ringsegmentförmige, Feder, welche selbsttätig in die Aufnahme eintreten kann. Gemäss dieser Ausführungsform stammt die Federkraft des eben genannten Federmechanismus aus dem Anschlagelement selbst, was den konstruktiven Aufwand weiter reduzieren kann.

Eine weitere bevorzugte Ausgestaltung der Erfindung liegt darin, dass an der inneren Antriebswelle zumindest eine Schulter zum Begrenzen einer Verschiebung der inneren Antriebswelle relativ zur äusseren Antriebswelle und/oder zum Gehäuse nach vorne, insbesondere am Ende des Setzverfahrens, vorzugsweise am Ende der zweiten Phase, vorgesehen ist. Hierdurch kann in besonders einfacher Weise sichergestellt werden, dass der Spreizkörper nicht übermässig weit in die Spreizhülse eingetrieben wird, was im Hinblick auf das Lastverhalten vorteilhaft sein kann. Die zumindest eine Schulter kann insbesondere eine Ringschulter sein. Insbesondere kann die schon weiter oben erwähnte Schulter die zumindest eine Schulter sein. Die zumindest eine Schulter kann zum Anschlagen an der äusseren Antriebswelle oder zum Anschlagen am Gehäuse vorgesehen sein. Es können auch zumindest eine Schulter zum Anschlagen an der äusseren Antriebswelle und zumindest eine Schulter zum Anschlagen am Gehäuse vorgesehen sein. Durch zwei Schultern kann die Zuverlässigkeit noch weiter verbessert werden.

Weiterhin ist es besonders vorteilhaft, dass die innere Antriebswelle in einem gesperrten Zustand der Sperreinrichtung nach vorne über die äussere Antriebswelle übersteht. Unter dem gesperrten Zustand der Sperreinrichtung kann insbesondere ein Zustand verstanden werden, in welchem die Sperreinrichtung die axiale Verschiebung der inneren Antriebswelle relativ zur äusseren Antriebswelle nach vorne zeitweise begrenzt oder/und ein Zustand, in welchem sich das Anschlagelement in der Sperrposition befindet. Gemäss dieser Ausführungsform kann die innere Antriebswelle zu Beginn der ersten Phase des Setzverfahrens nach vorne über die äussere Antriebswelle vorstehen, so dass die innere Antriebswelle einen Zapfen bilden kann, auf welchen die Spreizhülse des Spreizankers aufgesteckt werden kann. Dies ermöglicht eine besonders gute Zentrierung und somit Zuverlässigkeit und/oder eine besonders gute Handhabbarkeit. Darüber hinaus kann bei dieser Ausführungsform ein besonders kleiner Verschiebeweg der inneren Antriebswelle am Übergang zwischen der ersten Phase und der zweiten Phase des Setzverfahrens gegeben sein und vorzugsweise kann die innere Antriebswelle schon in der ersten Phase am Spreizkörper anliegen. Hierdurch können abrupte Bewegungen vermieden und die Belastung des Setzgeräts und/oder der Bohrmaschine noch weiter reduziert werden.

Ferner ist es besonders zweckmässig, dass die äussere Antriebswelle über eine Umfangsverzahnung drehfest und zugleich zumindest in Grenzen axial verschiebbar an der inneren Antriebswelle gelagert ist. Eine solche Verzahnung weist Zähne am Aussenumfang der inneren Antriebswelle und hierzu korrespondierende Zähne am Innenumfang der äusseren Antriebswelle auf. Hierdurch ist eine konstruktiv besonders einfache Ausgestaltung gegeben. Die Umfangsverzahnung kann insbesondere eine Keilverzahnung sein.

Eine andere besonders brauchbare Weiterbildung der Erfindung liegt darin, dass die äussere Antriebswelle vorne ein Mitnehmerprofil für eine Drehkopplung mit der Spreizhülse aufweist. Ein solches Mitnehmerprofil ermöglicht eine formschlüssige Drehkopplung, also eine Drehkopplung mittels korrespondierender Formen, welche eine besonders wirksame Übertragung einer Drehung erlaubt. Insbesondere kann das Mitnehmerprofil stirnseitig an der äusseren Antriebswelle angeordnete Stirnzähne aufweisen, das heisst es kann eine Kopplung über eine Stirnverzahnung vorgesehen werden. In diesem Fall kann das an den Spreizankern angeordnete Gegenprofil zum Mitnehmerprofil besonders einfach gefertigt werden. Zumindest ein Teil der Stirnzähne können vorzugsweise Keilzähne sein.

Die Erfindung betrifft überdies ein Verfahren zum Setzen eines Spreizankers, welcher eine Spreizhülse und einen in der Spreizhülse angeordneten Spreizkörper für die Spreizhülse aufweist, in einem Substrat, bei dem in einer ersten Phase die Spreizhülse drehend in das Substrat eingetrieben wird, und in einer anschliessenden zweiten Phase der Spreizkörper in der Spreizhülse vorgetrieben und hierdurch die Spreizhülse vorne aufgeweitet wird, wobei die Spreizhülse zugleich gedreht wird, insbesondere um die Längsachse gedreht wird. Hierdurch kann der Spreizanker selbstbohrend und selbsthinterschneidend gesetzt werden, was in besonders einfacher Weise besonders gute Lastwerte ermöglicht. Der Hinterschnitt wird in der zweiten Phase erzeugt, nämlich durch die Kombination von Drehen und Aufweiten.

Insbesondere kann vorgesehen werden, dass sowohl die erste Phase als auch die zweite Phase mittels eines erfindungsgemässen Setzgeräts durchgeführt wird. Demgemäss wird das Setzgerät bestimmungsgemäss eingesetzt. Vorzugsweise bleibt das Setzgerät zwischen der ersten Phase und der zweiten Phase mit dem Spreizanker in Kontakt.

Die Erfindung betrifft überdies einen Spreizanker, welcher eine Spreizhülse mit einem Spreizkanal, der sich nach vorne hin verjüngt, und einen im Spreizkanal angeordneten Spreizkörper für die Spreizhülse aufweist, wobei an der vorderen Stirnfläche der Spreizhülse zumindest eine erste Schneidkante und an der Umfangsfläche der Spreizhülse zumindest eine zweite Schneidkante gebildet ist. Ein solcher Spreizanker ist besonders geeignet für die Verwendung zusammen mit einem erfindungsgemässen Setzgerät und/oder in einem erfindungsgemässen Verfahren. Die zumindest eine erste Schneidkante kann das Einbohren des Spreizankers in der ersten Phase besonders gut unterstützen, und die zumindest eine zweite Schneidkante das Erstellen des Hinterschnitts in der zweiten Phase.

Insbesondere kann vorgesehen werden, dass der Spreizanker einen Schneidkörper aufweist, an dem sowohl die zumindest eine erste Schneidkante als auch die zumindest eine zweite Schneidkante ausgebildet ist. Es ist also ein gemeinsamer Schneidkörper vorgesehen, an dem beide Schneidkanten gebildet sind. Dies kann im Hinblick auf den Herstellungs- und/oder Materialaufwand besonders vorteilhaft sein. Der Schneidkörper kann beispielsweise aus Hartmetall bestehen oder er kann ein gezielt gehärteter Bereich der Spreizhülse sein. Der Schneidkörper ist insbesondere an der Spreizhülse angeordnet. Vorzugsweise sind mehre Schneidkörper vorgesehen.

Um das Einbohren zu erleichtern kann vorgesehen sein, dass die vordere Stirnfläche der Spreizhülse eine Spitze bildet, das heisst dass sie einen Öffnungswinkel kleiner als 180° aufweist. Beispielsweise kann ein Öffnungswinkel von 120° +/- 10° vorgesehen sein.

Die Erfindung betrifft schliesslich auch die Kombination aus einem erfindungsgemässen Spreizanker und einem erfindungsgemässen Setzgerät. Insbesondere kann der erfindungsgemässe Spreizanker besonders effizient mit einem erfindungsgemässen Setzgerät und/oder in einem erfindungsgemässe Setzverfahren gesetzt werden.

Die im Zusammenhang mit dem erfindungsgemässen Setzgerät, dem erfindungsgemässen Setzverfahren, dem erfindungsgemässen Spreizanker und der erfindungsgemässen Kombination genannten Merkmale sollen hier frei kombinierbar sein, so dass beispielsweise Merkmale, die im Zusammenhang mit dem erfindungsgemässen Setzgerät erläutert werden, auch beim erfindungsgemässen Setzverfahren zum Einsatz kommen können.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: ein Ausführungsbeispiel eines Setzgeräts in Seitenansicht;
- Figur 2:: das Setzgerät der Figur 1 in Längsschnittsansicht A-A gemäss Figur 1;
- Figur 3:: das Setzgerät der Figuren 1 und 2 in Querschnittsansicht C-C gemäss Figur 2;
- Figur 4:: das Setzgerät der Figuren 1 bis 3 in einer längsgeschnittenen Detailansicht zu Beginn eines erfindungsgemässen Setzverfahrens;
- Figur 5:: das Setzgerät der Figuren 1 bis 3 in einer längsgeschnittenen Detailansicht analog Figur 4 am Übergang zwischen der ersten Phase und der zweiten Phase des erfindungsgemässen Setzverfahrens;
- Figur 6:: das Setzgerät der Figuren 1 bis 3 in einer längsgeschnittenen Detailansicht analog Figuren 4 und 5 am Ende der zweiten Phase des erfindungsgemässen Setzverfahrens; und
- Figur 7:: ein vergrösserte Ansicht des mit dem Setzgerät in einem erfindungsgemässen Verfahren setzbaren Spreizankers.

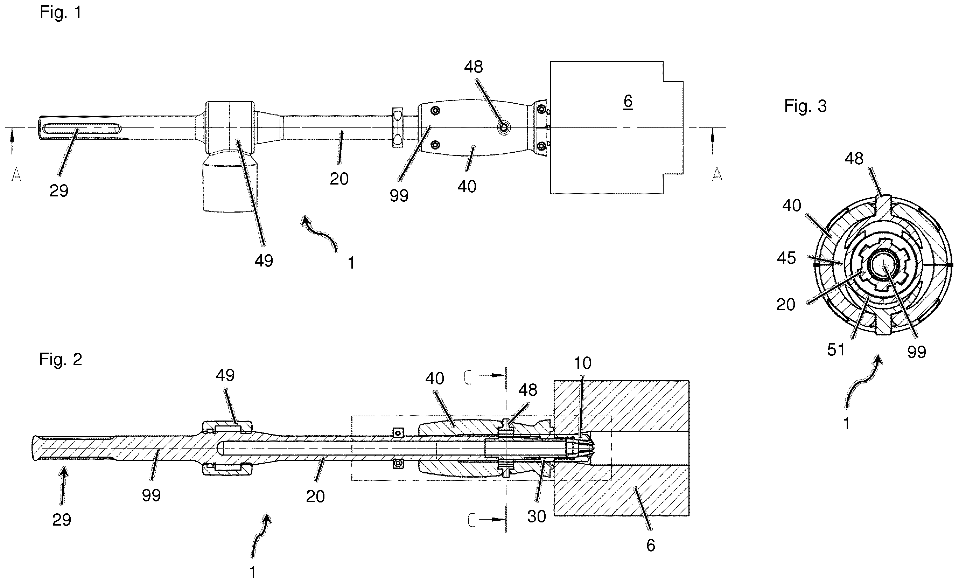

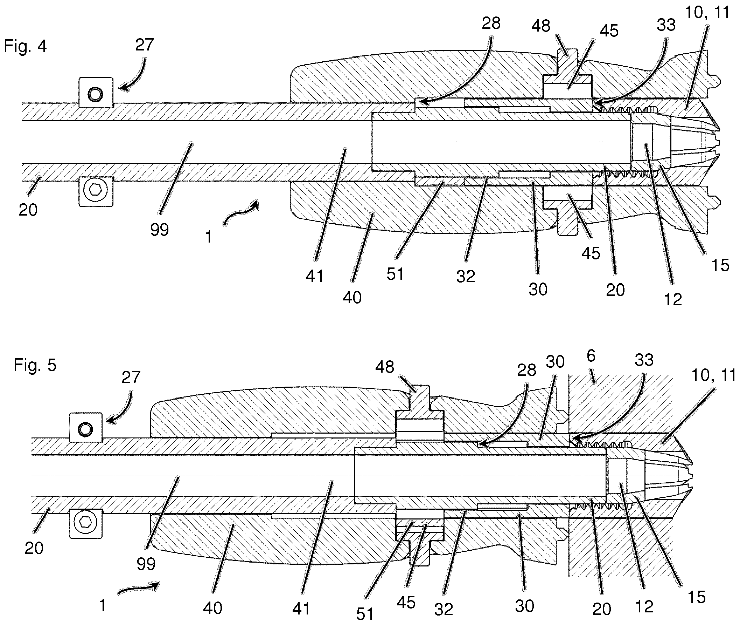

Die Figuren 1 bis 6 zeigen ein erstes Ausführungsbeispiel eines erfindungsgemässen Setzgeräts, zusammen mit einem Spreizanker, wobei der Übersichtlichkeit halber eine Reihe von Details im vorderen Bereich des Setzgeräts lediglich in den Detailansichten der Figuren 4 bis 6 mit Bezugszeichen versehen sind.

Das Setzgerät 1 weist ein Gehäuse 40 auf, welches einen Handgriff bildet, und welches mit einer Durchgangsöffnung 41 versehen ist. In dieser Durchgangsöffnung 41 sind eine innere Antriebswelle 20 sowie eine äussere Antriebswelle 30 angeordnet, wobei die äussere Antriebswelle 30 die innere Antriebswelle 20 in einem vorderen Bereich der inneren Antriebswelle 20 umgibt. Während die äussere Antriebswelle 30 rückseitig im Gehäuse 40 endet, steht die innere Antriebswelle 20 rückseitig aus dem Gehäuse 40 vor und weist an einem hinteren Bereich ein Einsteckende 29 für eine Verbindung mit dem Bohrfutter einer nicht dargestellten Schlagbohrmaschine auf. Die innere Antriebswelle 20, die äussere Antriebswelle 30 und die Durchgangsöffnung 41 sind koaxial mit einer Längsachse 99 angeordnet.

Die äussere Antriebswelle 30 ist in gewissen Grenzen axial, das heisst in einer Richtung parallel zur Längsachse 99, verschiebbar an der inneren Antriebswelle 20 angeordnet. Zwischen der inneren Antriebswelle 20 und der äusseren Antriebswelle 30 ist eine Umfangsverzahnung 32 gebildet, welche eine Drehbewegung von der inneren Antriebswelle 20 auf die äussere Antriebswelle 30 überträgt, ohne die axiale Verschiebbarkeit der äusseren Antriebswelle 30 an der inneren Antriebswelle 20 zu beinträchtigen.

Wie insbesondere die Figuren 4 bis 6 zeigen ist die innere Antriebswelle 20 mehrteilig ausgebildet und besteht aus zwei axial separaten Teilen, nämlich aus einem relativ langen hinteren Teil, welches vom Einsteckende 29 in das Gehäuse 40 reicht, und einem vorderen Teil.

Das Setzgerät 1 weist ferner eine freigebbare Sperreinrichtung auf, welche ihrerseits ein Anschlagelement 51 aufweist. Dieses Anschlagelement 51 kann in eine Sperrposition gebracht werden, in welcher es in Axialrichtung betrachtet zwischen der inneren Antriebswelle 20 und der äusseren Antriebswelle 30 liegt und in der es sowohl die innere Antriebswelle 20 als auch die äussere Antriebswelle 30 radial überlappt. Insbesondere befindet sich das Anschlagelement 51 in der Sperrposition vor der inneren Antriebswelle 20 und hinter der äusseren Antriebswelle 30, vorzugsweise vor einer an der inneren Antriebswelle 20 ausgebildeten Schulter 28 und hinter der rückwärtigen Stirnfläche der äusseren Antriebswelle 30. Wird die innere Antriebswelle 20 in der äusseren Antriebswelle 30 nach vorne verschoben, während sich das Anschlagelement 51 in der Sperrposition befindet, so wird ein Punkt erreicht, an dem die innere Antriebswelle 20, insbesondere mit deren Schulter 28, am Anschlagelement 51 anschlägt und das Anschlagelement 51 wiederum mit seiner Vorderseite an der Rückseite der äusseren Antriebswelle 30 anschlägt. Aufgrund dieses doppelten Anschlagens sperrt das Anschlagelement 51 eine weitere axiale Verschiebung der inneren Antriebswelle 20 relativ zur äusseren Antriebswelle 30 nach vorne, das heisst eine axiale Verschiebung der inneren Antriebswelle 20 in der äusseren Antriebswelle 30 nach vorne ist durch das Anschlagelement 51 begrenzt, und es ist eine Übertragung von nach vorne gerichteten Axialkräften von der inneren Antriebswelle 20 auf die äussere Antriebswelle 30 über das Anschlagelement 51 hinweg möglich. Figur 4 zeigt das Anschlagelement 51 in der Sperrposition mit am Anschlagelement 51 anschlagender Schulter 28 und am Anschlagelement 51 anschlagender äusserer Antriebswelle 30. Die innere Antriebswelle 20 steht in diesem Zustand ein Stück weit nach vorne über die äussere Antriebswelle 30 vor.

Im Gehäuse 40 ist eine Aufnahme 45 zum Aufnehmen des Anschlagelements 51 ausgebildet, welche radial aussenseitig an die Durchgangsöffnung 41 angrenzt. Wenn das Anschlagelement 51 axial vor diese Aufnahme 45 gelangt, kann das Anschlagelement 51 in einer radial nach aussen gerichteten Bewegung in die Aufnahme 45 in eine Freigabeposition eintreten. In der Freigabeposition befindet sich das Anschlagelement 51 radial versetzt zu den beiden Antriebswellen 20 und 30, so dass die Antriebswellen 20 und 30 in der Freigabeposition nicht mehr an das Anschlagelement 51 anschlagen können und das Anschlagelement 51 die axiale Relativbewegung der beiden Antriebswellen 20 und 30 zueinander somit nicht mehr begrenzt. Insbesondere ist in der Freigabeposition auch keine Übertragung von nach vorne gerichteten Axialkräften von der inneren Antriebswelle 20 auf die äussere Antriebswelle 30 über das Anschlagelement 51 hinweg mehr möglich. Figur 5 zeigt das Setzgerät 1 in einem Zustand, welcher sich einstellt, nachdem das Anschlagelement 51 gerade in die Aufnahme 45 in die Freigabeposition eingetreten ist.

Wie unter anderem Figur 3 zeigt ist in der dargestellten Ausführungsform das Anschlagelement 51 als offener Ring, die Schulter 28 als Ringschulter und die Aufnahme 45 ringförmig ausgebildet. Es sind aber auch andere Ausgestaltungen möglich. Insbesondere ist in der dargestellten Ausführungsform das Anschlagelement 51 als Feder ausgebildet, was ein selbsttätiges Eintreten des Anschlagelements 51 in die Aufnahme 45 in die Freigabeposition mittels Federkraft ermöglicht, welche im Anschlagelement 51 selbst gespeichert ist. Grundsätzlich sind aber auch Anordnungen mit unelastischem Anschlagelement 51 und zusätzlichen Federn denkbar.

An der vorderen Stirnfläche der äusseren Antriebswelle 30 ist ein Mitnehmerprofil 33 mit Zähnen ausgebildet, welches zur drehfesten Kopplung zwischen der äusseren Antriebswelle 30 und einer Spreizhülse 11 des zu setzenden Spreizankers 10 in ein korrespondierendes Profil an der Spreizhülse 11 des Spreizankers 10 eingreifen kann.

Die Figuren 4 bis 6 zeigen das Setzgerät 1 in verschiedenen aufeinanderfolgenden Stadien eines erfindungsgemässen Setzverfahrens. Insbesondere zeigt Figur 4 den Zustand des Setzgeräts 1 zu Beginn der ersten Phase des Setzverfahrens. In diesem Zustand befindet sich die Sperreinrichtung mit ihrem Anschlagelement 51 in der Sperrposition, die äussere Antriebswelle 30 liegt über das Anschlagelement 51 axial an der Schulter 28 der inneren Antriebswelle 20 an, und die innere Antriebswelle 20 steht vorderseitig unter Bildung eines Zapfens ein Stück weit über die äussere Antriebswelle 30 hervor. Auf diesen Zapfen ist die Spreizhülse 11 des Spreizankers 10 aufgeschoben, wobei der Zapfen in einen im Inneren der Spreizhülse 11 ausgebildeten Spreizkanal 12 hineinragt, und zwar so tief, dass die hintere Stirnfläche der Spreizhülse 11 an der äusseren Antriebswelle 30 anliegt und in das Mitnehmerprofil 33 der äusseren Antriebswelle 30 eingreift. Vorzugsweise ist die Anordnung so dimensioniert, dass in diesem Zustand der durch innere Antriebswelle 20 gebildete Zapfen an einem im Spreizkanal 12 des Spreizankers 10 angeordneten Spreizkörper 15 des Spreizankers 10 anliegt oder zumindest nicht allzu weit von diesem entfernt ist.

Nun wird das Setzgerät 1 an der Vorderseite seines Gehäuses 40 auf ein Substrat 6 aufgesetzt und die innere Antriebswelle 20 mittels einer Schlagbohrmaschine in eine drehschlagende Bewegung versetzt. Die Drehbewegung der inneren Antriebswelle 20 wird über die Umfangsverzahnung 32 an die äussere Antriebswelle 30 und von dieser wiederum über das Mitnehmerprofil 33 an die Spreizhülse 11 des Spreizankers 10 weitergegeben. Die Schlagbewegung der inneren Antriebswelle 20 nach vorne wird über das Anschlagelement 51 der Sperreinrichtung an die äussere Antriebswelle 30 und von dieser wiederum über ihre vordere Stirnfläche an die Spreizhülse 11 weitergegeben. Infolgedessen wird die Spreizhülse 11 in der ersten Phase des Setzverfahrens vom Setzgerät 1 dreh-schlagend bewegt und hierbei in das Substrat 6 eingebohrt.

Beim Einbohren der Spreizhülse 11 in das Substrat 6 bewegen sich die innere Antriebswelle 20, die äussere Antriebswelle 30 und das axial zwischen diesen beiden Antriebswellen 20 und 30 in radialer Überlappung mit den Antriebswellen 20 und 30 liegende Anschlagelement 51 relativ zum Gehäuse 40 axial nach vorne. Diese Bewegung der Antriebswellen 20 und 30 und des Anschlagelements 51 erfolgt so weit, bis sich das Anschlagelement 51 in axialer Überlappung mit der Aufnahme 45 im Gehäuse 40 befindet. Aufgrund von Federkraft springt das Anschlagelement 51 nun radial nach aussen in die Aufnahme 45 in eine Freigabeposition des Anschlagelements 51. In dieser Freigabeposition ist die radiale Überlappung des Anschlagelements 51 mit zumindest einer der beiden Antriebswellen, vorzugsweise mit beiden Antriebswellen 20 und 30, aufgehoben. Hiermit ist auch die axiale Kraftübertragung von der inneren Antriebswelle 20 aus die äussere Antriebswelle 30 und die Spreizhülse 11 des Spreizankers 10 aufgehoben. Hiermit ist die erste Phase des Setzverfahrens automatisch abgeschlossen und die zweite Phase beginnt. Das resultierende Stadium ist in Figur 5 dargestellt.

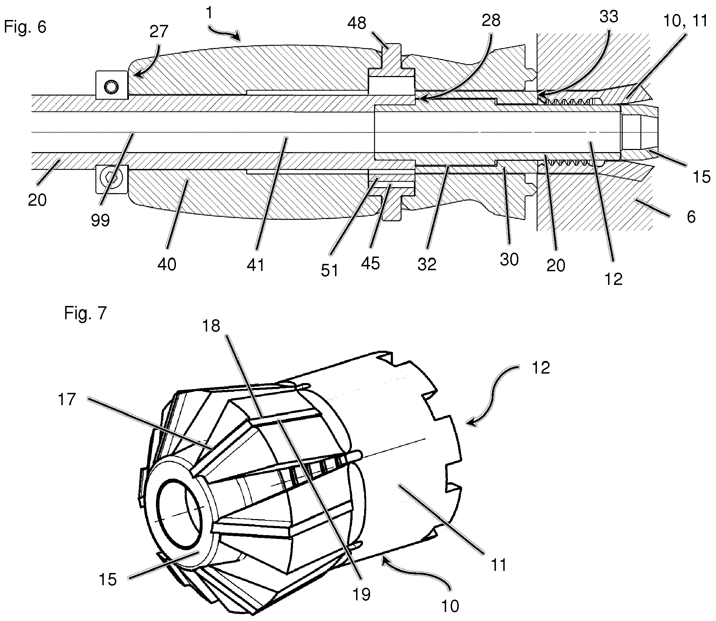

In der zweiten Phase führt die von der Schlagbohrmaschine beaufschlagte innere Antriebswelle 20 weiterhin eine dreh-schlagende Bewegung aus. Da sich die Sperreinrichtung aber nun in der Freigabeposition befindet, wird nur noch die Drehbewegung der inneren Antriebswelle 20 an die Spreizhülse 11 weitergeben, nämlich weiterhin über die Umfangsverzahnung 32 an die äussere Antriebswelle 30 und von dieser über das Mitnehmerprofil 33 an die Spreizhülse 11. Die Schlagbewegung der inneren Antriebswelle 20 wird hingegen nicht mehr auf die Spreizhülse 11 übertragen, da die innere Antriebswelle 20 und die äussere Antriebswelle 30 in Axialrichtung nicht mehr aneinander anliegen. Die Spreizhülse 11 führt somit in den der zweiten Phase im Wesentlichen nur noch eine Drehbewegung aus. Da sich aber aufgrund des freigegebenen Zustandes der Sperreinrichtung die innere Antriebswelle 20 nun relativ zur äusseren Antriebswelle 30 axial nach vorne bewegen kann, beaufschlagt die innere Antriebswelle 20 in der zweiten Phase den Spreizkörper 15 des Spreizankers 10 schlagend und treibt den Spreizkörper 15 im Spreizkanal 12 der sich drehenden Spreizhülse 11 nach vorne. Dabei gelangt der Spreizkörper 15 in einen vorderen, sich verjüngenden Bereich des Spreizkanals 12, wo der Spreizkörper 15 die Spreizhülse 11 radial aufweitet. Dieses Aufweiten, in Kombination mit der Drehbewegung der Spreizhülse 11, erzeugt auf Höhe des vorderen Bereichs der Spreizhülse 11 einen Hinterschnitt im Substrat 6, in welchen die Spreizhülse 11 eingeformt ist. Die zweite Phase ist vorzugsweise beendet, wenn die Schulter 28 der inneren Antriebswelle 20, welche in der ersten Phase mittelbar, nämlich über das Anschlagelement 51, an der äusseren Antriebswelle 30 angeschlagen hat, nun unmittelbar an der äusseren Antriebswelle 30 anschlägt und/oder wenn eine bezogen auf das Gehäuse 40 nach hinten versetzt an der inneren Antriebswelle 20 angeordnete weitere Schulter 27 rückwärtig am Gehäuse 40 anschlägt. Der resultierende Zustand ist in Figur 6 gezeigt.

Durch das erfindungsgemässe Setzgerät 1 kann also mit einem kontinuierlichen Setzverfahren ein Bohrloch erzeugt, der Spreizanker 10 gesetzt und ein Hinterschnitt erzeugt werden. Dabei werden die Setztiefe und die Expansion durch das Setzgerät 1 sichergestellt, so dass eine besonders hohe Benutzerfreundlichkeit und Sicherheit gegeben ist. Durch das Prinzip des Hinterschnitts können bei gleicher Einbindetiefe regelmässig höhere Lasten übertragen werden.

Der Spreizkörper 15 weist vorzugsweise einen selbsthemmenden Winkel auf, so dass das Setzgeräts 1 nach erfolgter Aufweitung der Spreizhülse 11 entfernt werden kann ohne dass sich die Spreizhülse 11 wieder in ihrer Ausgangsposition zurückbewegt. An einem an der Spreizhülse 11 angeordneten, in den Spreizkanal 12 weisenden Innengewinde im Spreizanker 10 können nach Abschluss des Setzverfahrens zum Beispiel Gewindebolzen angebracht werden.

Um das Setzgerät 1 nach Abschluss der zweiten Phase des Setzverfahrens für eine weitere Setzung wieder in den Ausgangszustand zurückbringen zu können, können in der Aufnahme 45 für das Anschlagelement 51 ein oder mehrere Rückstellelemente 48 vorgesehen sein, mit denen das Anschlagelement 51 radial nach innen verschiebbar ist. Im vorliegenden Ausführungsbeispiel sind zwei gabelförmige Rückstellelemente 48 vorgesehen, welche jeweils einen aussen am Gehäuse 40 vortretenden Rückstellknopf aufweisen.

Wie insbesondere die Figuren 1 und 2 zeigen ist die innere Antriebswelle 20 in einem vorderen Bereich als nach vorne hin offene Hohlwelle ausgeführt. Über diese Hohlwelle kann beim Setzverfahren anfallendes Bohrmehl abgeführt werden. Hinter dem Gehäuse 40 ist an der inneren Antriebswelle 20 eine Drehdurchführung 49 vorgesehen, mit dem das Material wiederum aus der Hohlwelle abgeführt werden kann.

Figur 7 zeigt eine Detailansicht des Spreizankers 10. Wie in Figur 7 erkennbar ist, bildet die vordere Stirnfläche der Spreizhülse 11 eine Spitze, das heisst sie weist einen Öffnungswinkel kleiner als 180°, vorzugsweise von etwa 120° auf. Die Spreizhülse 11 des Spreizankers 10 weist an ihrer Aussenseite sowohl stirnseitige Schneidkanten 17, welche den Bohrvorgang der Spreizhülse 11 unterstützen, als auch umfangsseitige Schneidkanten 18, welche das Aufweiten der Spreizhülse 11 unterstützen, auf. Besonders bevorzugt ist es, dass die Spreizhülse 11 mit Schneidkörpern 19, vorzugsweise aus Hartmetall, ausgestattet ist, wobei vorzugsweise an den Schneidkörpern 19 jeweils sowohl eine stirnseitige Schneidkante 17 als auch eine umfangsseitige Schneidkante 18 gebildet sind. Die Schneidkörper können aber auch gezielt gehärtete Bereiche der Spreizhülse 11 sein. An der hinteren, das heisst an der der Spitze gegenüberliegenden Stirnfläche weist die Spreizhülse 11 ein Gegenprofil für das Mitnehmerprofil 33 des Setzgeräts 1 auf.

## Patentansprüche

1. Setzgerät für einen Spreizanker (10), welcher eine Spreizhülse (11) und einen in der Spreizhülse (11) angeordneten Spreizkörper (15) für die Spreizhülse (11) aufweist,
- mit einer inneren Antriebswelle (20) zum axialen Vortreiben des Spreizkörpers (15) in der Spreizhülse (11),
- mit einer die innere Antriebswelle (20) umgebenden äusseren Antriebswelle (30) zum drehenden Antreiben und axialen Vortreiben der Spreizhülse (11) in ein Substrat (6),
- wobei die innere Antriebswelle (20) in einem hinteren Bereich ein Einsteckende (29) zum Einsetzen in eine Schlagbohrmaschine aufweist, und
- wobei die äussere Antriebswelle (30) drehfest und zugleich zumindest in Grenzen axial verschiebbar an der inneren Antriebswelle (20) gelagert ist,
- und mit einer freigebbaren Sperreinrichtung, mit der zum Übertragen von nach vorne gerichteten Axialkräften von der inneren Antriebswelle (20) auf die äussere Antriebswelle (30) eine axiale Verschiebung der inneren Antriebswelle (20) relativ zur äusseren Antriebswelle (30) nach vorne zeitweise begrenzbar ist.

2. Setzgerät nach Anspruch 1,
**dadurch gekennzeichnet,**
**dass** die innere Antriebswelle (20) zumindest bereichsweise eine Hohlwelle ist, und dass das Setzgerät eine Drehdurchführung (49) zum Abführen von Material aus der drehenden inneren Antriebswelle (20) aufweist.

3. Setzgerät nach einem der vorstehenden Ansprüche,
**dadurch gekennzeichnet,**
**dass** die freigebbare Sperreinrichtung zumindest ein radial versetzbares Anschlagelement (51) aufweist, welches zum Begrenzen der axialen Verschiebung der inneren Antriebswelle (20) relativ zur äusseren Antriebswelle (30) nach vorne in eine Sperrposition bringbar ist, in der sich das Anschlagelement (51) zwischen der äusseren Antriebswelle (30) und der inneren Antriebswelle (20) befindet.

4. Setzgerät nach Anspruch 3,
**dadurch gekennzeichnet,**
**dass** das Setzgerät ein Gehäuse (40) mit einer Durchgangsöffnung (41) aufweist, in welcher die äussere Antriebswelle (30) und die innere Antriebswelle (20) drehbar gelagert sind, wobei das Gehäuse (40) eine Aufnahme (45) zum Aufnehmen des radial versetzbaren Anschlagelements (51) in einer Freigabeposition aufweist.

5. Setzgerät nach Anspruch 4,
**dadurch gekennzeichnet,**
**dass** das Anschlagelement (51) eine, insbesondere ringsegmentförmige, Feder ist, welche selbsttätig in die Aufnahme (45) eintreten kann.

6. Setzgerät nach einem der vorstehenden Ansprüche,
**dadurch gekennzeichnet,**
**dass** an der inneren Antriebswelle (20) zumindest eine Schulter (27, 28) zum Begrenzen einer Verschiebung der inneren Antriebswelle (20) relativ zur äusseren Antriebswelle (30) nach vorne vorgesehen ist.

7. Setzgerät nach einem der vorstehenden Ansprüche,
**dadurch gekennzeichnet,**
**dass** die innere Antriebswelle (20) in einem gesperrten Zustand der Sperreinrichtung nach vorne über die äussere Antriebswelle (30) übersteht.

8. Setzgerät nach einem der vorstehenden Ansprüche,
**dadurch gekennzeichnet,**
**dass** die äussere Antriebswelle (30) über eine Umfangsverzahnung (32) drehfest und zugleich zumindest in Grenzen axial verschiebbar an der inneren Antriebswelle (20) gelagert ist.

9. Setzgerät nach einem der vorstehenden Ansprüche,
**dadurch gekennzeichnet,**
**dass** die äussere Antriebswelle (30) vorne ein Mitnehmerprofil (33) für eine Drehkopplung mit der Spreizhülse (11) aufweist, wobei das Mitnehmerprofil (33) stirnseitig an der äusseren Antriebswelle (30) angeordnete Stirnzähne aufweist.

10. Verfahren zum Setzen eines Spreizankers (10), welcher eine Spreizhülse (11) und einen in der Spreizhülse (11) angeordneten Spreizkörper (15) für die Spreizhülse (11) aufweist, in einem Substrat (6), bei dem
- in einer ersten Phase die Spreizhülse (11) drehend in das Substrat (6) eingetrieben wird, und
- in einer anschliessenden zweiten Phase der Spreizkörper (15) in der Spreizhülse (11) vorgetrieben und hierdurch die Spreizhülse (11) vorne aufgeweitet wird, wobei die Spreizhülse (11) zugleich gedreht wird.

11. Verfahren nach Anspruch 10,
**dadurch gekennzeichnet,**
**dass** sowohl die erste Phase als auch die zweite Phase mittels eines Setzgeräts nach einem der Ansprüche 1 bis 9 durchgeführt wird.

12. Spreizanker (10), welcher eine Spreizhülse (11) mit einem Spreizkanal (12), der sich nach vorne hin verjüngt, und einen im Spreizkanal (12) angeordneten Spreizkörper (15) für die Spreizhülse (11) aufweist, wobei an der vorderen Stirnfläche der Spreizhülse (11) zumindest eine erste Schneidkante (17) und an der Umfangsfläche der Spreizhülse (11) zumindest eine zweite Schneidkante (18) gebildet ist.

13. Spreizanker (10) nach Anspruch 12,
**dadurch gekennzeichnet,**
**dass** der Spreizanker (10) einen Schneidkörper (19) aufweist, an dem sowohl die zumindest eine erste Schneidkante (17) als auch die zumindest eine zweite Schneidkante (18) ausgebildet ist.

14. Spreizanker (10) nach einem der Ansprüche 12 oder 13,
**dadurch gekennzeichnet,**
**dass** die vordere Stirnfläche der Spreizhülse (11) eine Spitze bildet.

15. Kombination aus einem Spreizanker (10) nach einem der Ansprüche 12 bis 14 und einem Setzgerät nach einem der Ansprüche 1 bis 9.
